(19) Europäisches Patentamt
European Patent Office
Office européen des brevets

(11) **EP 4 317 336 A1**

(12) **EUROPEAN PATENT APPLICATION**
published in accordance with Art. 153(4) EPC

(43) Date of publication:
07.02.2024 Bulletin 2024/06

(21) Application number: 22775508.9

(22) Date of filing: 18.03.2022

(51) International Patent Classification (IPC):
$C09D\ 201/00^{(2006.01)}$      $C09D\ 7/63^{(2018.01)}$
$C09D\ 7/65^{(2018.01)}$

(52) Cooperative Patent Classification (CPC):
C09D 7/63; C09D 7/65; C09D 201/00

(86) International application number:
PCT/JP2022/012877

(87) International publication number:
WO 2022/202721 (29.09.2022 Gazette 2022/39)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.03.2021 JP 2021053794

(71) Applicant: NITTO DENKO CORPORATION
Ibaraki-shi
Osaka 567-8680 (JP)

(72) Inventors:
• YANO Hikaru
  Ibaraki-shi, Osaka 567-8680 (JP)
• EGUCHI Kenichi
  Ibaraki-shi, Osaka 567-8680 (JP)
• KOBAYASHI Soichiro
  Ibaraki-shi, Osaka 567-8680 (JP)

(74) Representative: Gill Jennings & Every LLP
The Broadgate Tower
20 Primrose Street
London EC2A 2ES (GB)

(54) **COATING MATERIAL**

(57) The present invention relates to a coating material containing a resin component $\alpha$ and an oil component. An SP value of the resin component $\alpha$ is 7.5 to 11.0 $(cal/cm^3)^{1/2}$, and the oil component can exude out from a cured or dried coating film layer to which the coating material has been applied when a temperature drops to a predetermined value or less.

## FIG. 1

EP 4 317 336 A1

**Description**

TECHNICAL FIELD

The present invention relates to a coating material, and more particularly to a coating material used for preventing adhesion of snow or ice on an object surface such as a solar panel, an aircraft, a railway, an automobile, a wind power generator, a house, a traffic light, a signboard, a tunnel, and a snow cornice prevention plate.

BACKGROUND ART

Adhesion of ice (ice adhesion) on an object surface and adhesion of snow (snow adhesion) due to snowfall cause many damages and obstacles in various fields. For example, ice adhesion on airfoils, snow adhesion and freezing on a lower part of an engine vehicle, snow adhesion on headlights of an automobile, ice adhesion on blades of a solar panel or a wind power generator, and snow adhesion and freezing on a lamp of a traffic light may be obstacles to the operation, driving, and safety of the objects.

In addition, snow adhesion and freezing on a house roof, a signboard, or the like may cause damage to a person due to damage to these structures or falling snow.

In related art, in each industrial field, various coating materials containing oil and rubber mats have been developed as a countermeasure for preventing such snow adhesion and ice adhesion on an object surface.

For example, Patent Literature 1 discloses a technique in which a heat insulation layer formed of a sponge material and a surface layer laminated on the heat insulation layer are formed, and the surface layer can bleed out silicone oil.

Patent Literature 2 discloses an ice and snow adhesion prevention rubber mat provided with an anti-slip design, which is an ice and snow adhesion prevention rubber mat made of a synthetic rubber having a hardness in a range of A10 to A40 in a durometer hardness test and in which a liquid additive having an ice and snow adhesion prevention effect bleeds out on a surface thereof under a condition of a temperature of 5°C or lower.

CITATION LIST

PATENT LITERATURE

Patent Literature 1: JP2962986B
Patent Literature 2: JP3986883B

SUMMARY OF INVENTION

TECHNICAL PROBLEM

However, according to a study of the present inventors, a sheet containing a large amount of silicone oil in oil to be used, as disclosed in Patent Literature 1, may contaminate a peripheral object of an adherend with the silicone oil. A trace amount of the silicone oil changes surface characteristics of the adherend, making it difficult to clean, and causes, for example, cissing when a contaminated peripheral object is coated.

In addition, the rubber mat disclosed in Patent Literature 2 is not applicable to many object surfaces as the coating material.

The present invention has been made in view of the above circumstances of the related art, and an object of the present invention is to provide a coating material which causes less contamination to an adherend and provides a coating film layer having an excellent ice and/or snow adhesion prevention function.

SOLUTION TO PROBLEM

As a result of intensive studies to solve the above problems, the present inventors have focused on an SP value of a resin component in a coating material and have completed the present invention.

That is, the present invention relates to the following <1> to <6>.

<1> A coating material containing a resin component $\alpha$ and an oil component, in which

an SP value of the resin component $\alpha$ is 7.5 to 11.0 $(cal/cm^3)^{1/2}$, and
the oil component can exude out from a cured or dried coating film layer to which the coating material has been applied when a temperature drops to a predetermined value or less.

<2> The coating material according to <1>, in which the resin component $\alpha$ has a crystalline portion and an amorphous portion.

<3> The coating material according to <1> or <2>, containing a solvent.

<4> The coating material according to any one of <1> to <3>, containing a curing agent having a hydrosilyl group.

<5> The coating material according to any one of <1> to <4>, containing a resin component $\beta$ having an SP value different from the SP value of the resin component $\alpha$.

<6> The coating material according to claim <5>, in which the resin component $\beta$ has a functional group having an atom other than a carbon atom and a hydrogen atom.

## ADVANTAGEOUS EFFECTS OF INVENTION

A coating film layer obtained from the coating material of the present invention causes less contamination to an adherend and has an excellent ice and/or snow adhesion prevention function.

## BRIEF DESCRIPTION OF DRAWINGS

[FIG. 1] FIG. 1 is a cross-sectional view showing a coating film layer formed from a coating material of the present invention together with an object to be coated.

[FIG. 2] FIG. 2 is a cross-sectional view showing an example of a layer structure including the coating film layer formed from the coating material of the present invention together with the object to be coated.

## DESCRIPTION OF EMBODIMENTS

Hereinafter, an embodiment of the present invention will be described in more detail, but the present invention is not limited to the following embodiment at all.

[Coating Material]

A coating material of the present invention contains a resin component $\alpha$ and an oil component.

(Resin Component $\alpha$)

An SP value of the resin component $\alpha$ (a value of solubility parameter) is 7.5 to 11.0 $(cal/cm^3)^{1/2}$.

When an SP value of the resin component and an SP value of the oil component in the coating material are close to each other, the resin component and the oil component are likely to be compatible with each other, and a uniform coating film can be formed from the coating material. When the resin component $\alpha$ having an SP value within the above range is used, not only silicone oil [SP value: 7.0 to 8.0 $(cal/cm^3)^{1/2}$] but also non-silicone oil having an SP value close to the above range can be used, and a content of the non-silicone oil in the coating film formed using the coating material of the present invention can be increased. As a result, a content of the silicone oil in the coating film formed using the coating material of the present invention can be reduced, and contamination to an adherend can be reduced.

The SP value of the resin component $\alpha$ is preferably from 7.7 to 10.8 $(cal/cm^3)^{1/2}$, more preferably from 8.0 to 10.5 $(cal/cm^3)^{1/2}$, and still more preferably from 8.3 to 10.2 $(cal/cm^3)^{1/2}$ from the viewpoint of reducing contamination to the adherend.

The SP value can be measured by a method described in Examples.

The resin component $\alpha$ preferably has a crystalline portion and an amorphous portion. When the resin component $\alpha$ has a crystalline portion, it is possible to form a thermally reversible physical crosslinked structure called pseudo-crosslinking. As a result, the coating film layer can be produced simply and in a short time from the coating material of the present invention.

Examples of the resin component $\alpha$ include ethylene propylene diene rubber (EPDM), ethylene propylene rubber (EPT), polyethylene (PE), polypropylene (PP), styrenebutadiene rubber (SBR), hydrogenated styrene-based plastic elastomer (SEBS), and styrene-based plastic elastomer (SBS). Among these, ethylene propylene diene rubber (EPDM), ethylene propylene rubber (EPT), polyethylene (PE), and polypropylene (PP) are preferable, and ethylene propylene diene rubber (EPDM) is more preferable, from the viewpoint of reducing contamination to an adherend.

These components may be used alone or in combination of two or more.

(Resin Component β)

The coating material of the present invention preferably further contains a resin component β The resin component β has an SP value different from the SP value of the resin component α.

When the coating material of the present invention contains the resin component β, it is considered that the resin component β is segregated at a surface of the coating film layer obtained from the coating material of the present invention and at an interface between the coating film layer and an object to be coated, and a strength of the coating film layer and adhesiveness between the coating film layer and the object to be coated are improved.

Examples of the resin component β include maleic anhydride modified SEBS (hydrogenated styrene-based thermoplastic elastomer), amino modified SEBS (hydrogenated styrene-based thermoplastic elastomer), maleic anhydride modified polyisoprene, and maleic anhydride modified polypropylene. Among these, maleic anhydride modified SEBS (hydrogenated styrene-based thermoplastic elastomer), amino modified SEBS (hydrogenated styrene-based thermoplastic elastomer), and maleic anhydride modified polyisoprene are preferable, and maleic anhydride modified SEBS (hydrogenated styrene-based thermoplastic elastomer) is more preferable, from the viewpoint of improving the strength of the coating film layer and the adhesiveness between the coating film layer and the object to be coated.

These components may be used alone or in combination of two or more.

The resin component β preferably has a functional group having an atom other than a carbon atom and a hydrogen atom. When the resin component β has the functional group, it is considered that the object to be coated of the coating film layer obtained from the coating material of the present invention and the functional group react with each other and the adhesiveness between the coating film layer and the object to be coated is improved.

Examples of the functional group include a maleic anhydride group, a carboxylic anhydride group, a carboxylic acid group, an amino group, a hydroxy group, an alkoxysilyl group, a hydrosilyl group, and an isocyanate group. Among these, a maleic anhydride group, a carboxylic anhydride group, a carboxylic acid group, and an alkoxysilyl group are preferable, and a maleic anhydride group is more preferable, from the viewpoint of improving the strength of the coating film layer and the adhesiveness between the coating film layer and the object to be coated.

The SP value of the resin component β is preferably 7.5 to 11.0 $(cal/cm^3)^{1/2}$, more preferably 7.7 to 10.8 $(cal/cm^3)^{1/2}$, and still more preferably 8.0 to 10.5 $(cal/cm^3)^{1/2}$.

(Oil Component)

The coating material of the present invention contains an oil component.

The oil component can exude out from a cured or dried coating film layer to which the coating material of the present invention has been applied when a temperature drops to a predetermined value or less.

The term "a predetermined value or less" means, for example, a freezing point (0°C) or less.

As the oil component, for example, hydrocarbon-based oil, fluorine oil, polyether-based oil, ester-based oil, phosphorus compound-based oil, alcohol, silicone oil, carboxylic acid, or mineral-based oil can be used.

Examples of the hydrocarbon-based oil include liquid paraffin, vaseline, paraffin wax, naphthene-based hydrocarbon oil, and aromatic hydrocarbon oil. Among these, liquid paraffin is preferable because the liquid paraffin has an excellent ice and/or snow adhesion prevention function.

As described above, the coating film formed using the coating material of the present invention can reduce the content of silicone oil, and the content of silicone oil in the oil component is preferably 20.0 mass% or less, more preferably 15.0 mass% or less, and still more preferably contains no silicone oil.

(Characteristics of Resin Component α and Oil Component)

Hereinafter, characteristics of the resin component α and the oil component when an oil component (a first oil component) is used will be described.

As the first oil component and the resin component α, for example, a combination satisfying the following properties 1) and 2) is preferably selected.

1) The resin component α and the first oil component are not phase-separated and are compatible with each other at a temperature at which bleeding of the first oil component is not required, for example, at a normal temperature of about 20°C to 80°C, which is significantly higher than a predetermined value such as a freezing point. On the other hand, the resin component α and the first oil component are phase-separated under an environment of a temperature at which bleeding of the first oil component is required, for example, a temperature of a predetermined value or less, such as a freezing point or less. The first oil component is oil that can exude out from a cured or dried coating film layer to which the coating material of the present invention has been applied when a temperature drops to a predetermined value or less. The term "a predetermined value or less" means, for example, a freezing point (0°C) or less.

2) A behavior of the first oil component is changed depending on whether the temperature is a temperature at which bleeding of the first oil component is not required or a temperature at which bleeding of the first oil component is required. In other words, the first oil component functions as a low-temperature phase-separable oil component that is phase-separated from the resin component $\alpha$.

For example, when the relationships 1) and 2) above are satisfied, the first oil component is compatible with the resin component $\alpha$ and does not bleed out at a temperature at which bleeding of the first oil component is not required. On the other hand, when the temperature is changed to the temperature at which bleeding of the first oil component is required, the first oil component is phase-separated from the resin component $\alpha$ to exude out from the resin component $\alpha$, and can function as a bleedable low-temperature phase-separable oil component.

For example, the compatibility can be controlled by utilizing a difference in SP value, a difference in molecular weight, a difference in molecular structure, and the like between the resin component $\alpha$ and the first oil component, and the first oil component can be phase-separated from the resin component $\alpha$ to exude out from the coating film layer when the temperature drops to a predetermined value or less.

The first oil component does not need to be constituted by one oil component, and may contain a plurality of oil components as long as the above-described conditions are satisfied.

As long as the above-described conditions are satisfied, a second oil component that is always compatible with the resin component $\alpha$ and does not bleed out may be contained.

(Curing Agent)

The coating material of the present invention preferably further contains a curing agent. The curing agent preferably has a hydrosilyl group. When the coating material of the present invention contains a curing agent having a hydrosilyl group, the resin components $\alpha$ are bonded to each other by hydrosilylation, and the strength of the coating film layer obtained from the coating material of the present invention is improved.

Examples of the curing agent include tris(dimethylsiloxy)phenylsilane, a methylhydrosiloxane-octylmethylsiloxane copolymer, bis(dimethylsiloxy)diphenylsilane, methylhydrogensilicone,2,4,6,8-tetramethylcyclotetrasiloxane, 1,1,3,3,5,5-hexamethyltrisiloxane, 1,4-bis(dimethylsilyl)benzene, and 1,1,3,3-tetramethyldisiloxane.

(Solvent)

The coating material of the present invention preferably further contains a solvent.

Examples of the solvent include aromatic hydrocarbon-based solvents such as toluene and xylene, ester-based solvents such as ethyl acetate and butyl acetate, hydrocarbon-based solvents such as hexane, octane, decane and isoparaffin, and ketone-based solvents such as acetone and methyl ethyl ketone.

(Curing Catalyst)

The coating material of the present invention may further contain a curing catalyst.

Examples of the curing catalyst include metal catalysts such as platinum (0)-1,3-divinyl-1,1,3,3-tetramethyldisiloxane complex, hexachloridoplatinic (IV) acid, and chlorotris(triphenylphosphine)rhodium (I).

(Reaction Control Agent)

The coating material of the present invention may further contain a reaction control agent to stably produce a coating film.

Examples of reaction control agent include a reaction control agent manufactured by Shin-Etsu Chemical Co., Ltd. (product number: NO. 6-10), a reaction control agent manufactured by Dow Toray Industries, Inc. (product number: SILASTIC™ RD-9, SILASTIC™ RD-201), a reaction control agent manufactured by Momentive (product number: ME75), and a reaction control agent manufactured by Gelest (product numbers: VMS-005, VMS-T11).

(Other Components)

The coating material of the present invention may further contain a filler such as silica, talc, calcium carbonate, titanium oxide, clay, or pigment.

Examples of silica include silica manufactured by Nippon Aerosil Co., Ltd (for example, AEROSIL 50, 130, 200, 300, R972, R974, R976, RX50, RX200, RX300, RY50, RY300, R7200, R8200, and R9200).

(Method of Producing Coating Material)

The coating material of the present invention can be obtained by mixing and/or stirring the components described above by a known method. The content of each component in the coating material is as follows.

The content of the resin component $\alpha$ in the coating film formed using the coating material of the present invention can be preferably set to 25 mass% or more, more preferably 30 mass% or more, and still more preferably 35 mass% or more. The content of the resin component $\alpha$ is preferably 75 mass% or less, more preferably 70 mass% or less, and still more preferably 65 mass% or less.

The content of the oil component in the coating film formed using the coating material of the present invention can be preferably set to 25 mass% or more, more preferably 30 mass% or more, and still more preferably 35 mass% or more. The content of the oil component is preferably 75 mass% or less, more preferably 70 mass% or less, and still more preferably 65 mass% or less.

The content of the curing agent in the coating material of the present invention is preferably 0.03 mass% or more, more preferably 0.06 mass% or more, and still more preferably 0.1 mass% or more, based on a total mass of the resin component $\alpha$ and the resin component $\beta$. The content of the curing agent is preferably 40 mass% or less, more preferably 30 mass% or less, and still more preferably 20 mass% or less, based on the total mass of the resin component $\alpha$ and the resin component $\beta$.

The content of the curing catalyst in the coating material of the present invention is preferably 0.1 ppm or more, more preferably 1 ppm or more, and still more preferably 2 ppm or more, based on the total mass of the resin component $\alpha$ and the resin component $\beta$. The content of the curing catalyst is preferably set to 1000 ppm or less, more preferably 750 ppm or less, and still more preferably 500 ppm or less, based on the total mass of the resin component $\alpha$ and the resin component $\beta$.

[Coating Film Layer]

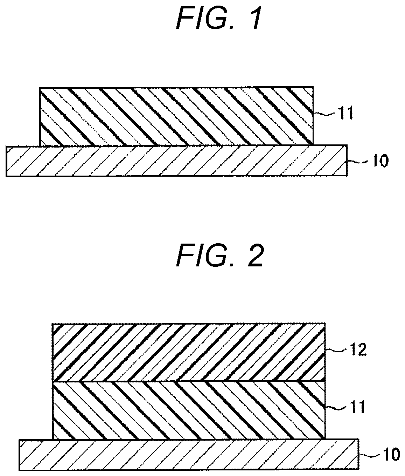

For example, as shown in FIG. 1, a first coating film layer 11 can be obtained by applying the coating material of the present invention to an object 10 to be coated.

As a coating method of the coating material of the present invention, general methods such as brush coating, spray coating, and various coater coating can be used. Coating is usually performed 1 to 2 times. In order to improve an adhesive force of coating film layer formed using the coating material of the present invention to the object 10 to be coated and to prevent the object 10 from rusting, a primer may be applied to the object 10 to be coated, and the coating material of the present invention may be applied over the primer.

A thickness of a first coating film layer 11 is not particularly limited, and is preferably 2000 $\mu$m or less from the viewpoint of quality of the coating film after drying, and preferably 50 $\mu$m or more from the viewpoint of the strength.

Examples of the object 10 to be coated used in the present invention include polyurethane resins, polyurethane acrylic resins, rubber-based resins, vinyl chloride resins, polyester resins, silicone resins, elastomers, fluorine resins, polyamide resins, polyolefin resins (polyethylene, polypropylene, etc.), metal plates or metal foils (aluminum, copper, silver, iron, nickel, tin, stainless steel, etc.), concrete, and ceramics. The object 10 to be coated may have a film shape or a sheet shape.

After the object 10 to be coated is coated with the coating material of the present invention, the coating material can be cured or dried by being left to stand in an environment of, for example, 20 to 180°C for 3 minutes to 3 hours.

For example, as shown in FIG. 2, a second coating film layer 12 can be formed on the coating film layer 11 obtained from the coating material of the present invention with a top-coat coating material as necessary.

The top-coat coating material is not particularly limited, and for example, the same coating material as the coating material of the present invention can be used, but the top-coat coating material may not contain an oil component.

As a coating method of the top-coat coating material, general methods such as brush coating, spray coating, and various coater coating can be used. Coating is usually performed 1 to 2 times.

A thickness of the second coating film layer 12 is not particularly limited, and is preferably 500 $\mu$m or less, because the oil component can easily permeate to the surface of the coating film layer, in other words, oil permeability with respect to the second coating film layer 12 is obtained, and is preferably 50 $\mu$m or more from the viewpoint of the strength.

A curing or drying temperature and a curing or drying time at the time of coating the first coating film layer 11 with the top-coat coating material are the same as a curing or drying temperature and a curing or drying time at the time of coating the object 10 to be coated with the coating material of the present invention.

The curing or drying of the coating material of the present invention and the curing or drying of the top-coat coating material may be performed simultaneously or separately.

EXAMPLES

Hereinafter, the present invention will be described in more detail with reference to Examples and the like, and the present invention is not limited to the following Examples.

<Preparation of Coating Film Layer>

[Example 1]

As a coating material component, a resin component: EPDM resin "3092 PM" (manufactured by Mitsui Chemicals, Inc.), a first oil component: liquid paraffin (manufactured by FUJIFILM Wako Pure Chemical Corporation, product number: liquid paraffin [density (20°C) 0.825 to 0.850 g/ml]), and a solvent: toluene were prepared.

The resin component was dissolved in toluene to prepare a toluene solution having a content of the resin component of 15 mass%. The toluene solution (81.6 mass%) and the first oil component (18.4 mass%) were mixed under conditions of 25°C and 101 kPa. The obtained mixed solution was stirred with a spatula for 60 seconds, and the mixture was further stirred for 120 seconds and defoamed for 120 seconds with a rotation and revolution mixer (CONDITIONING MIXER AR-250, manufactured by THINKY CORPORATION) to obtain a coating material.

The obtained coating material was applied to an aluminum foil (manufactured by Takeuchi Metal Foil & Powder Co., Ltd., product number: A1N30, thickness: 80 μm), and dried and cured for one day under an environment of 25°C to form a coating film layer.

[Example 2]

In addition to the coating material component used in Example 1, phenyl-modified silicone oil (manufactured by Shin-Etsu Chemical Co., Ltd., product number: KF-56A) was prepared as the first oil component.

A coating material and a coating film layer were obtained according to the method described in Example 1, except that the coating material component and a content thereof were as follows.

Toluene solution (81.6 mass%)

First oil component (liquid paraffin) (12.2 mass%)
First oil component (phenyl-modified silicone oil) (6.2 mass%)

[Example 3]

A coating material and a coating film layer were obtained according to the method described in Example 2, except that the coating material component and a content thereof were as follows.

Toluene solution: 87.0 mass%

First oil component (liquid paraffin): 9.1 mass%
First oil component (phenyl-modified silicone oil): 3.9 mass%

[Example 4]

The coating material component used in Example 2 and an additional resin component: maleic anhydride group-containing SEBS "FG1901GT" (manufactured by Kraton) were prepared.

"3092PM" was dissolved in toluene to prepare a toluene solution 1 having a content of the "3092PM" of 15 mass%. "FG1901GT" was dissolved in toluene to prepare a toluene solution 2 having a content of the "FG1901GT" of 20 mass%.

A coating material and a coating film layer were obtained according to the method described in Example 2, except that the coating material component and a content thereof were as follows.

Toluene solution 1: 85.6 mass%
Toluene solution 2: 1.3 mass%
First oil component (liquid paraffin): 9.2 mass%
First oil component (phenyl-modified silicone oil): 3.9 mass%

[Example 5]

A coating material and a coating film layer were obtained in the same manner as in Example 4, except that a resin component: SEBS "H1053" containing no maleic anhydride group (manufactured by Asahi Kasei Corporation) is used instead of the resin component: "FG1901GT".

[Example 6]

As a coating material component, a resin component: EPDM resin "3092 PM" (manufactured by Mitsui Chemicals, Inc.), a first oil component: liquid paraffin (manufactured by FUJIFILM Wako Pure Chemical Corporation, product number: liquid paraffin [density (20°C) 0.825 to 0.850 g/ml]), a first oil component: phenyl-modified silicone oil (manufactured by Shin-Etsu Chemical Co., Ltd., product number: KF-56A), a curing agent: tris(dimethylsiloxy)phenylsilane (manufactured by Tokyo Chemical Industry Co., Ltd.), a curing catalyst: platinum (0)-1,3-divinyl-1,1,3,3-tetramethyldisiloxane complex solution to 2% in xylene (manufactured by Sigma-Aldrich Japan), and a solvent: toluene were prepared.
The resin component was dissolved in toluene to prepare a toluene solution having a content of the resin component of 15 mass%. The toluene solution (86.7 mass%), the first oil component (liquid paraffin) (9.1 mass%), the first oil component (phenyl-modified silicone oil) (3.9 mass%), the curing agent (0.3 mass%), and the curing catalyst (0.007 mass%) were mixed under conditions of 25°C and 101 kPa. The obtained mixed solution was stirred with a spatula for 60 seconds, and the mixture was further stirred for 120 seconds and defoamed for 120 seconds with a rotation and revolution mixer (CONDITIONING MIXER AR-250, manufactured by THINKY CORPORATION) to obtain a coating material.
The obtained coating material was applied to an aluminum foil (manufactured by Takeuchi Metal Foil & Powder Co., Ltd., product number: A1N30, thickness: 80 μm), dried for 3 hours under an environment of 25°C, and then heated at 150°C for 10 minutes to form a coating film layer.

[Example 7]

The coating material component used in Example 6 and an additional resin component: maleic anhydride group-containing SEBS "FG1901GT" (manufactured by Kraton) were prepared.
"3092PM" was dissolved in toluene to prepare a toluene solution 1 having a content of the "3092PM" of 15 mass%. "FG1901GT" was dissolved in toluene to prepare a toluene solution 2 having a content of the "FG1901GT" of 20 mass%.
A coating material and a coating film layer were obtained according to the method described in Example 6, except that the coating material component and a content thereof were as follows.

Toluene solution 1: 85.1 mass%
Toluene solution 2: 1.3 mass%
First oil component (liquid paraffin): 9.1 mass%
First oil component (phenyl-modified silicone oil): 3.9 mass%
Curing agent: 0.5 mass%
Curing catalyst: 0.007 mass%

[Example 8]

A coating material and a coating film layer were obtained according to the method described in Example 7, except that the coating material component and a content thereof were as follows.

Toluene solution 1: 83.1 mass%
Toluene solution 2: 3.3 mass%
First oil component (liquid paraffin): 9.2 mass%
First oil component (phenyl-modified silicone oil): 3.9 mass%

Curing agent: 0.5 mass%
Curing catalyst: 0.007 mass%

[Example 9]

The coating material component used in Example 7 and an additional reaction control agent (manufactured by Shin-Etsu Chemical Co., Ltd., product number: No. 6-10) were prepared.
A coating material and a coating film layer were obtained according to the method described in Example 7, except that the coating material component and a content thereof were as follows.

Toluene solution 1: 80.9 mass%
Toluene solution 2: 1.2 mass%
First oil component (liquid paraffin): 10.3 mass%
Second oil component (phenyl-modified silicone oil): 6.8 mass%
Curing agent: 0.5 mass%
Reaction control agent: 0.2 mass%
Curing catalyst: 0.006 mass%

[Example 10]

A coating material and a coating film layer were obtained in the same manner as in Example 9, except that a curing agent: a methylhydrosiloxane-octylmethylsiloxane copolymer (manufactured by Gelest, product number: HAM-301) was used instead of the curing agent: tris(dimethylsiloxy)phenylsilane.

[Example 11]

A coating material component (other than toluene) used in Example 9 and an isoparaffin solvent (manufactured by Exxon Mobil Corporation, product number: ISOPAR E) instead of toluene were prepared.
"3092PM" was dissolved in an isoparaffin solvent to prepare an isoparaffin solution 1 having a content of the "3092PM" of 15 mass%. "FG1901GT" was dissolved in the isoparaffin solvent to prepare an isoparaffin solution 2 having a content of the "FG1901GT" of 20 mass%.
A coating material and a coating film layer were obtained according to the method described in Example 9, except that the coating material component and a content thereof were as follows.

Isoparaffin solution 1: 80.9 mass%
Isoparaffin solution 2: 1.2 mass%
First oil component (liquid paraffin): 10.3 mass%
Second oil component (phenyl-modified silicone oil): 6.8 mass%
Curing agent: 0.5 mass%
Reaction control agent: 0.2 mass%
Curing catalyst: 0.006 mass%

[Comparative Example 1]

As a coating material component, a resin component: X-21-5849 (manufactured by Shin-Etsu Chemical Co., Ltd.), a first oil component: carbinol-modified oil (manufactured by Shin-Etsu Chemical Co., Ltd., product number: KF-6002), a second oil component: dimethylsiloxane oil (manufactured by Shin-Etsu Chemical Co., Ltd., product number: KF-96 (50cs)), silica (manufactured by Nippon Aerosil Co., Ltd., product number: R8200), a curing agent (manufactured by Colcoat Co., Ltd., product number: ethyl silicate 40), and a curing catalyst (manufactured by Nippon Kagaku Sangyo Co., Ltd., product number: Pucat 25) were prepared.
The resin component (27.4 mass%), the first oil component (40.1 mass%), the second oil component (17.6 mass%), and silica (11.0 mass%) were mixed under conditions of 25°C and 101 kPa. The obtained mixed solution was stirred with a spatula for 60 seconds, and then stirred with a Disper (manufactured by Primix Corporation, LABOLUTION) at a speed of 5000 rpm for 10 minutes. Then, the above curing agent (2.5 mass%) and curing catalyst (1.4 mass%) were added, and the obtained mixed solution was stirred with a spatula for 60 seconds, and the mixture was further stirred for 60 seconds and defoamed for 60 seconds with a rotation and revolution mixer (CONDITIONING MIXER AR-250, manufactured by THINKY CORPORATION) to obtain a coating material.
The obtained coating material was applied to an aluminum foil (manufactured by Takeuchi Metal Foil & Powder Co., Ltd., product number: A1N30, thickness: 80 $\mu$m), and cured for one week under an environment of 25°C to form a coating film layer.

[Comparative Example 2]

As a coating material component, a resin component 1: KE-1950-50A (manufactured by Shin-Etsu Chemical Co., Ltd.), a resin component 2: KE-1950-50B (manufactured by Shin-Etsu Chemical Co., Ltd.), a first oil component: phenyl-modified oil (manufactured by Momentive, product number: TSF437), a second oil component: dimethylsiloxane oil (manufactured by Shin-Etsu Chemical Co., Ltd., product number: KF-96 (50cs)), a curing agent (Shin-Etsu Chemical Co., Ltd., product number: KF-99), a control agent (Shin-Etsu Chemical Co., Ltd., product number: No. 6-10), and a curing catalyst (Shin-Etsu Chemical Co., Ltd., product number: CAT-PL-50T) were prepared.

The resin component 1 (19.8 mass%), the resin component 2 (19.8 mass%), the first oil component (23.8 mass%), the second oil component (35.6 mass%), the curing agent (0.1 mass%), the control agent (0.8 mass%), and the curing catalyst (0.1 mass%) were mixed under conditions of 25°C and 101 kPa. The obtained mixed solution was stirred with a spatula for 60 seconds, and the mixture was further stirred for 120 seconds and defoamed for 120 seconds with a rotation and revolution mixer (CONDITIONING MIXER AR-250, manufactured by THINKY CORPORATION) to obtain a coating material.

The obtained coating material was applied to an aluminum foil (manufactured by Takeuchi Metal Foil & Powder Co., Ltd., product number: A1N30, thickness: 80 $\mu$m), and heated at 150°C for 10 minutes to form a coating film layer.

<SP Value>

The SP value (solubility parameter) of each component used above was obtained from a Fedors method using cohesive energy E and molar molecular volume V described in the paper (R. F. Fedors: Polym. Eng. Sci., 14 [2], 147-154 (1974)).

Specifically, a cohesive energy total value $\Sigma$E of the entire molecule of a target substance was divided by a molar molecular volume total value $\Sigma$V of the entire molecule of the target substance, and a value obtained by taking a square root was defined as the SP value. The cohesive energy total value $\Sigma$E of the entire molecule of the target substance can be obtained by weighted averaging the cohesive energies E (cal/mol) of respective atomic groups described in the above paper in terms of molar ratio. The molar molecular volume total value $\Sigma$V of entire molecule of the target substance can be obtained by weighted averaging the molar molecular volumes V (cm$^3$/mol) of respective atomic groups described in the above paper in terms of molar ratio. The molar ratio of each constituent atomic group of the target substance can be examined by performing Fourier transform nuclear magnetic resonance spectroscopy analysis.

$$\text{SP value} = (\text{cohesive energy } \Sigma E \text{ of entire molecule/molar molecular volume } \Sigma V \text{ of entire molecule})^{1/2}$$

Cohesive energy $\Sigma$E of entire molecule = weighted average of cohesive energy E of each constituent atomic group in terms of molar ratio

Molar molecular volume $\Sigma$V of entire molecule = weighted average of molar molecular volume V of each constituent atomic group in terms of molar ratio

A calculation example of the SP value by the Fedors method is as follows.

[Polyethylene (Constituent atomic group is CH$_2$)]

Values described in the above paper for the constituent atomic group CH$_2$ are cohesive energy E = 1180 (cal/mol), and molar molecular volume V = 16.1 (cm$^3$/mol).

$$\text{Cohesive energy } \Sigma E \text{ of entire molecule} = 1180 \times 1 = 1180 \text{ (cal/mol)}$$

$$\text{Molar molecular volume } \Sigma V \text{ of entire molecule} = 16.1 \times 1 = 16.1 \text{ (cm}^3\text{/mol)}$$

$$SP \text{ value} = (1180/16.1)^{1/2} = 8.56 \ (cal/cm^3)^{1/2}$$

[Polypropylene (Constituent atomic groups are $CH_2$, CH, and $CH_3$)]

Values described in the above paper for the constituent atomic group $CH_2$ are cohesive energy E = 1180 (cal/mol), and molar molecular volume V = 16.1 ($cm^3$/mol).
Values described in the above paper for the constituent atomic group CH are cohesive energy E = 820 (cal/mol), and molar molecular volume V = -1.0 ($cm^3$/mol).
Values described in the above paper for the constituent atomic group $CH_3$ are cohesive energy E = 1125 (cal/mol), and molar molecular volume V = 33.5 ($cm^3$/mol).

$$\text{Cohesive energy } \Sigma E \text{ of entire molecule} = 1180 \times (1/3) + 820 \times (1/3) + 1125 \times (1/3)$$
$$= 1042 \ (cal/mol)$$

$$\text{Molar molecular volume } \Sigma V \text{ of entire molecule} = 16.1 \times (1/3) - 1.0 \times (1/3) + 33.5 \times (1/3) = 16.2 \ (cm^3/mol)$$

$$SP \text{ value} = (1042/16.2)^{1/2} = 8.02 \ (cal/cm^3)^{1/2}$$

[Ethylene propylene rubber having a ratio of ethylene to propylene of 1:1 (constituent atomic groups are $CH_2$, CH, and $CH_3$)]

Values described in the above paper for the constituent atomic group $CH_2$ are cohesive energy E = 1180 (cal/mol), and molar molecular volume V = 16.1 ($cm^3$/mol).
Values described in the above paper for the constituent atomic group CH are cohesive energy E = 820 (cal/mol), and molar molecular volume V = -1.0 ($cm^3$/mol).
Values described in the above paper for the constituent atomic group $CH_3$ are cohesive energy E = 1125 (cal/mol), and molar molecular volume V = 33.5 ($cm^3$/mol).

$$\text{Cohesive energy } \Sigma E \text{ of entire molecule} = 1180 \times (3/5) + 820 \times (1/5) + 1125 \times (1/5)$$
$$= 1097 \ (cal/mol)$$

$$\text{Molar molecular volume } \Sigma V \text{ of entire molecule} = 16.1 \times (3/5) - 1.0 \times (1/5) + 33.5 \times (1/5) = 16.2 \ (cm^3/mol)$$

$$SP \text{ value} = (1042/16.2)^{1/2} = 8.23 \ (cal/cm^3)^{1/2}$$

The SP value of each component is as follows.

EPDM resin "3092PM": the SP value is 8.47 $(cal/cm^3)^{1/2}$
Maleic anhydride group-containing SEBS "FG1901GT": the SP value is 9.13 $(cal/cm^3)^{1/2}$
SEBS "H1053": the SP value is 9.05 $(cal/cm^3)^{1/2}$
"X-21-5849": the SP value is 7.39 $(cal/cm^3)^{1/2}$
"KE-1950-50A": the SP value is 7.38 $(cal/cm^3)^{1/2}$
"KE-1950-50B": the SP value is 7.38 $(cal/cm^3)^{1/2}$
Phenyl-modified silicone oil "KF-56A": the SP value is 8.79 $(cal/cm^3)^{1/2}$
Liquid paraffin: the SP value is 8.15 to 8.50 $(cal/cm^3)^{1/2}$

Dimethylsiloxane oil "KF-96 (50cs)": the SP value is 7.36 $(cal/cm^3)^{1/2}$
Carbinol-modified oil "KF-6002": the SP value is 7.75 $(cal/cm^3)^{1/2}$
Phenyl-modified oil "TSF437": the SP value is 8.77 $(cal/cm^3)^{1/2}$

<Evaluation>

The following evaluations were performed using the obtained coating film layers. The results are shown in Table 1.

(Ice Adhesion Strength)

A subject to be measured is a force required for moving ice blocks adhering to the coating film layer in an environment of -20°C. For convenience, a magnitude of the force is defined as an "ice adhesion strength" in the present specification.
The ice adhesion strength was measured by the following method.
First, a cylindrical ice block was produced. The ice block was produced by placing a stainless ring (inner diameter: 25 mm) on a bottom surface of a styrol square case 16 type (manufactured by AS ONE Corporation), pouring pure water (6 g) into the stainless ring, freezing the pure water at -20°C for 16 hours or more, and removing the stainless ring after freezing.
Next, an aluminum foil and the coating film layer, which were left to stand in an environment of -20°C for 16 hours, were attached to a stainless plate placed in parallel to a floor surface so that the coating film layer was on a surface of the stainless plate. The cylindrical ice block having an adhesion area of 4.9 $cm^2$ was adhered thereto.
After 3 hours from the setting of the environmental temperature to -20°C and the adhesion of the ice block, the ice block was pressed from a direction parallel to the floor surface in an environment of -20°C with a load cell (DPU-50 manufactured by Imada Co., Ltd., attachment jig A type A-4) at a speed of 0.1 mm/sec, and a load applied for 40 seconds was measured with a force gauge (ZTS-50N manufactured by Imada Co., Ltd.). A value obtained by dividing the measured maximum load by the adhesion area of 4.9 $cm^2$ was recorded as the ice adhesion strength. The test was performed three times, and the average value thereof was determined.
This measurement method was determined with reference to "Investigation to Prevent Icing (Part I), Hokkaido Industrial Research Institute Report No. 292 (1993)". The ice adhesion strength decreased substantially proportionally in response to an increase in the surface oil amount at least at -20°C.

(Adhesive Force)

A coating film for tensile strength measurement prepared on an aluminum foil:
A1N30 (manufactured by Takeuchi Metal Foil & Powder Co., Ltd.) was cut together with an aluminum foil into a rectangle shape of 2 cm × 15 cm, and was attached to an aluminum plate having a size of 15 cm × 15 cm (manufactured by Q-ho Metal Works, product name: M9502) using a double-sided tape (manufactured by Nitto Denko Corporation, product number: No. 5000NS) to prepare a sample.
A range of up to 9 cm from one end to the other end of the coating film of the obtained sample was peeled off by hand. Thereafter, one end of the sample and an aluminum plate are sandwiched between a tensile tester (manufactured by Shimadzu Corporation, Autograph AGS-50NX), and an adhesive force (N/20 mm) of the coating film layer was measured by a 180° peel test under conditions of a gripper distance of 15 cm and a test speed of 300 mm/min under an environment of 20°C.

(Coating Film Strength)

A coating film layer for tensile strength measurement prepared on an aluminum foil: A1N30 (manufactured by Takeuchi Metal Foil & Powder Co., Ltd.) was peeled off from the aluminum foil: A1N30 (manufactured by Takeuchi Metal Foil & Powder Co., Ltd.) and cut into a rectangular shape of 1 cm × 6 cm to form a sample. Using a tensile tester (manufactured by Shimadzu Corporation, Autograph AGS-50NX), the tensile strength (N/$mm^2$) of the sample obtained under the conditions of a gripper distance of 2 cm and a test speed of 300 mm/min under an environment of 20°C was measured.

[Table 1]

# EP 4 317 336 A1

Table 1

|  | Curing method | Ice adhesion force (N/cm$^2$) | Adhesive force (N/20 mm) | Coating film strength (N/mm$^2$) |
|---|---|---|---|---|
| Example 1 | Drying | 0.15 | 0.08 | 0.09 |
| Example 2 | Drying | 0.04 | 0.07 | 0.18 |
| Example 3 | Drying | 0.05 | 0.14 | 0.51 |
| Example 4 | Drying | 0.05 | 3.65 | 3.09 |
| Example 5 | Drying | 0.11 | 0.16 | 0.77 |
| Example 6 | Thermal curing | 0.12 | 2.04 | 3.64 |
| Example 7 | Thermal curing | 0.16 | 5.47 | 8.35 |
| Example 8 | Thermal curing | 0.28 | 5.42 | 8.05 |
| Example 9 | Thermal curing | 0.10 | 2.82 | 3.48 |
| Example 10 | Thermal curing | 0.09 | 2.74 | 2.05 |
| Example 11 | Thermal curing | 0.12 | 2.91 | 3.09 |
| Comparative Example 1 | Room temperature curing | 0.03 | 0.72 | 0.30 |
| Comparative Example 2 | Thermal curing | 0.10 | 0.71 | 1.50 |

From the results shown in Table 1, it was found that a coating film layer having an excellent ice and/or snow adhesion prevention function can be obtained from the coating material of the present invention. In addition, in the coating materials of Examples 1 to 11, the content of the silicone oil in the oil to be used is small, and contamination to the adherend is reduced.

Further, as can be seen from the results of Examples 4 and 7 to 11, it was found that an adhesive force and a coating film strength were improved by using maleic anhydride group-containing SEBS. In addition, as can be seen from the results of Example 6, it was found that the adhesive force and the coating film strength were improved by using a curing agent having a hydrosilyl group.

While the present invention has been described in detail with reference to specific embodiments, it will be apparent to those skilled in the art that various changes and modifications can be made without departing from the spirit and scope of the present invention. The present application is based on a Japanese Patent Application (Patent Application No. 2021-053794) filed on March 26, 2021, contents of which are incorporated herein by reference.

REFERENCE SIGNS LIST

    10 Object to be coated
    11 First coating film layer
    12 Second coating film layer

Claims

1.   A coating material comprising a resin component α and an oil component, wherein

    an SP value of the resin component α is 7.5 to 11.0 (cal/cm$^3$)$^{1/2}$, and
    the oil component can exude out from a cured or dried coating film layer to which the coating material has been applied when a temperature drops to a predetermined value or less.

2.   The coating material according to claim 1, wherein the resin component α has a crystalline portion and an amorphous portion.

3. The coating material according to claim 1 or 2, comprising a solvent.

4. The coating material according to any one of claims 1 to 3, comprising a curing agent having a hydrosilyl group.

5. The coating material according to any one of claims 1 to 4, comprising a resin component $\beta$ having an SP value different from the SP value of the resin component $\alpha$.

6. The coating material according to claim 5, wherein the resin component $\beta$ has a functional group having an atom other than a carbon atom and a hydrogen atom.

## FIG. 1

## FIG. 2

## INTERNATIONAL SEARCH REPORT

| International application No. |
|---|
| **PCT/JP2022/012877** |

**A. CLASSIFICATION OF SUBJECT MATTER**

*C09D 201/00*(2006.01)i; *C09D 7/63*(2018.01)i; *C09D 7/65*(2018.01)i
FI: C09D201/00; C09D7/63; C09D7/65

According to International Patent Classification (IPC) or to both national classification and IPC

**B. FIELDS SEARCHED**

Minimum documentation searched (classification system followed by classification symbols)

C09D201/00; C09D7/63; C09D7/65

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-328308 A (MITSUUMA KK) 19 November 2003 (2003-11-19) claims, examples | 1-6 |
| A | JP 2007-136685 A (SHIN ETSU POLYMER CO., LTD.) 07 June 2007 (2007-06-07) claims, examples | 1-6 |
| A | WO 2020/096071 A1 (NITTO DENKO CORP.) 14 May 2020 (2020-05-14) claims, examples | 1-6 |
| A | WO 2020/096070 A1 (NITTO DENKO CORP.) 14 May 2020 (2020-05-14) claims, examples | 1-6 |
| A | WO 2020/195987 A1 (NITTO DENKO CORP.) 01 October 2020 (2020-10-01) claims, examples | 1-6 |
| P, X | WO 2021/193973 A1 (NITTO DENKO CORP.) 30 September 2021 (2021-09-30) claims, examples | 1-6 |
| P, A | WO 2021/193313 A1 (NITTO DENKO CORP.) 30 September 2021 (2021-09-30) claims, examples | 1-6 |

☑ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **20 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2022/012877**

**C.     DOCUMENTS CONSIDERED TO BE RELEVANT**

| Category* | Citation of document, with indication, where appropriate, of the relevant passages | Relevant to claim No. |
|---|---|---|
| P, A | WO 2021/225130 A1 (NITTO DENKO CORP.) 11 November 2021 (2021-11-11) claims, examples | 1-6 |
| P, A | WO 2021/225129 A1 (NITTO DENKO CORP.) 11 November 2021 (2021-11-11) claims, examples | 1-6 |

Form PCT/ISA/210 (second sheet) (January 2015)

## INTERNATIONAL SEARCH REPORT
### Information on patent family members

International application No.

**PCT/JP2022/012877**

| Patent document cited in search report | | | Publication date (day/month/year) | Patent family member(s) | | | Publication date (day/month/year) |
|---|---|---|---|---|---|---|---|
| JP | 2003-328308 | A | 19 November 2003 | (Family: none) | | | |
| JP | 2007-136685 | A | 07 June 2007 | (Family: none) | | | |
| WO | 2020/096071 | A1 | 14 May 2020 | CN<br>claims, examples<br>CA | 112969765<br><br>3118554 | A<br><br>A | |
| WO | 2020/096070 | A1 | 14 May 2020 | CN<br>claims, examples<br>CA | 112969588<br><br>3118553 | A<br><br>A | |
| WO | 2020/195987 | A1 | 01 October 2020 | JP<br>claims, examples | 2020-164817 | A | |
| WO | 2021/193973 | A1 | 30 September 2021 | (Family: none) | | | |
| WO | 2021/193313 | A1 | 30 September 2021 | (Family: none) | | | |
| WO | 2021/225130 | A1 | 11 November 2021 | (Family: none) | | | |
| WO | 2021/225129 | A1 | 11 November 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2962986 B
- JP 3986883 B

- WO 2021053794 A

**Non-patent literature cited in the description**

- **R. F. FEDORS.** *Polym. Eng. Sci.,* 1974, vol. 14 (2), 147-154